# EUROPEAN PATENT SPECIFICATION

(11) **EP 2 937 751 B1**
(45) Date of publication and mention of the grant of the patent: **16.05.2018**
(21) Application number: 14743386.6
(22) Date of filing: 27.01.2014
(51) Int. Cl.: G05B 19/05, G05B 19/042

(54) **CONTROL DEVICE AND OPERATION METHOD FOR CONTROL DEVICE**
STEUERUNGSVORRICHTUNG UND BETRIEBSVERFAHREN FÜR STEUERUNGSVORRICHTUNG
DISPOSITIF DE COMMANDE ET PROCÉDÉ DE FONCTIONNEMENT DUDIT DISPOSITIF DE COMMANDE

(30) Priority: 25.01.2013 JP 2013012700
(43) Date of publication of application: 28.10.2015
(73) Proprietor: Omron Corporation, Kyoto-shi, Kyoto 600-8530 (JP)
(72) Inventor: ONO, Akio, Kyoto-shi Kyoto 600-8530 (JP); SAWADA, Shigenori, Kyoto-shi Kyoto 600-8530 (JP)
(74) Representative: Horn Kleimann Waitzhofer Patentanwälte PartG mbB
(86) International application number: PCT/JP2014/051676
(87) International publication number: WO 2014/115870

(56) References cited:
- JP-A- H05 304 529
- JP-A- H10 177 401
- JP-A- 2001 014 007
- JP-A- 2001 014 007
- JP-A- 2001 034 301
- JP-A- 2001 034 301
- JP-A- 2001 209 413
- JP-A- 2002 297 207
- JP-A- 2009 015 401
- US-A- 5 980 078

## Description

### FIELD

The present invention relates to a control device that serves as a master device on a network and controls one or a plurality of slave devices over the aforementioned network.

### Background Art

Typically, the machines and equipment used at many production sites are controlled by a control system including control devices such as programmable controllers (also referred to as a programmable logic controller: PLC, below). In such a control system, a PLC can be connected to one or a plurality of slave devices (usually a remote input-output device, a servo motor driver, or the like) via a network also known as a field bus.

The control system is also often provided with a function for backing up and restoring various kinds of data such as settings, and the like. For instance, Japanese Unexamined Patent Application Publication No.: 2011-215814 (Reference 1) discloses a programmable controller capable of backing up and restoring the value set for a given parameter in a communication device. The programmable controller includes backup sequence information and restore sequence information and performs a backup or a restoration process on the basis of the relevant sequence information when backing up or restoring a parameter.

Patent Document 2 describes network decentralized device management equipment for making it possible to efficiently perform system design, field building setting, maintenance, and operation, in a decentralized control system in which various types of field devices are connected via a network

### References

### Patent Documents

Patent Document 1: Japanese Unexamined Patent Application Publication No. 2011-215814
Patent Document 2: JP 2001 014007 A

### SUMMARY OF THE INVENTION

### Technical Problem

A device configuration can be modified as desired in the commonly used control system. Therefore, there are cases where the device configuration may be different between when a backup and a restore is performed. Given the features disclosed in the above-described Japanese Unexamined Patent Application Publication No. 2011-215814, the sequence information is prepared in advance. A restore may not be suitably performed when the device configuration differs between the time the backup and the restore are performed.

With the above sort of issues in mind, the present invention addresses these problems by providing a control device and a method of operating the control device. The control device and method of operating the same allows a restore process to be carried out as far as possible for a slave device connected to the control device via a network even when the data in the slave device changes from the time the data was created.

### Solution to Problem

One aspect of the invention is a control device that serves as a master device on a network and controls one or a plurality of slave devices over the network. The control device includes a storage unit that stores device configuration information including information indicating whether each of the slave devices registered as a member of the network has a network connection that is active or inactive; and setup information including parameters necessary for controlling the registered slave devices; and a processing unit configured to execute a restore process using data including the setup information. When executing the restore process, the processing unit reads the device configuration information and identifies a slave device included in the data and listed in the device configuration information read as having an active network connection, or a slave device that exists on the network, and executes the restore process using the setup information corresponding to the identified slave device.

The restore process may include a process where the control device transmits the necessary data regarding the slave device that is to be restored.

When any of the slave devices change to an active network connection, or any of the slave devices come to exist on the network, the processing unit restores the corresponding slave device setup information contained in the data.

The data may be supplied by a support device.

The processing unit may be configured to execute a backup process that generates the data using data from the storage unit and from the slave device.

Another aspect of the invention is method of operating a control device that serves as a master device on a network and controls one or a plurality of slave devices over the aforementioned network. The method of operating the control device including a step of storing device configuration information including information indicating whether each of the slave devices registered as a member of the network has a network connection that is active or inactive; and setup information including parameters necessary for controlling the registered slave devices; and a step of executing a restore process using data including the setup information. During the step of executing the restore process, the device configuration information is read, and a slave device identified that is included in the data and listed in the device configuration information read as having an active network connection, or a slave device identified that exists on the network, and the restore process executed for the slave device identified using the setup information corresponding thereto.

### Effects

According to the present invention a restore operation can be carried out as far as possible for a slave device connected to a control device via a network even when the data in the slave device changes from the time the data was created.

### BRIEF DESCRIPTION OF THE DRAWINGS

Figures 1A, 1B, 1C are schematic diagrams illustrating example configurations of a device that can be controlled using a control system according to an embodiment of the invention;
Figure 2 is a schematic diagram illustrating an example configuration of the control system according to an embodiment of the invention;
Figure 3 is a schematic diagram illustrating a hardware configuration of the CPU unit in a PLC according to an embodiment of the invention;
Figure 4 is a schematic diagram illustrating a software configuration of the CPU unit in a PLC according to an embodiment of the invention;
Figure 5 is a schematic diagram illustrating a hardware configuration of a servo motor driver according to an embodiment of the invention;
Figure 6 is a schematic diagram illustrating a hardware configuration of a support device configured for connection to a PLC according to an embodiment of the invention;
Figure 7 is a schematic diagram illustrating a software configuration of a support device configured for connection to a PLC according to an embodiment of the invention;
Figure 8 is a schematic diagram for describing the process of building a control system according to an embodiment of the invention;
Figure 9 is a schematic diagram illustrating an example of a data structure representing device configuration information according to an embodiment of the invention;
Figure 10 illustrates an example of a device configuration 1 for the device illustrated in Figure 8;
Figures 11A and 11B illustrate examples of device configurations 2 and 3 for the device illustrated in Figure 8;
Figure 12 illustrates an example of the details modified within the device configuration information illustrated in Figure 9;
Figures 13A and 13B are schematic diagrams for describing an outline of the backup process and the restore process implemented in a PLC according to an embodiment of the invention;
Figure 14 is a schematic diagram for describing the backup process and the restore process implemented in an embodiment of the invention;
Figure 15 is a schematic diagram for describing the backup process and the restore process implemented in a first embodiment;
Figure 16 is a flowchart illustrating the flow of the backup process according to the first embodiment;
Figure 17 is a flowchart illustrating the flow of the restore process according to the first embodiment;
Figures 18A and 18B are schematic diagrams for describing the restore process implemented in a second embodiment;
Figure 19 is a flowchart illustrating the flow of the restore process (case 1) according to the second embodiment;
Figure 20 is a schematic diagram illustrating an example of the information recorded in the restore process according to the second embodiment (case 1) at the completion thereof;
Figure 21 is a flowchart illustrating the flow of the restore process according to the second embodiment (case 1);
Figure 22 is a flowchart illustrating the flow of the restore process according to the second embodiment (case 2); and
Figure 23 is a schematic diagram for describing an outline of the backup process and the restore process implemented in a third embodiment.

### DETAILED DESCRIPTION

Embodiments of the present invention are described in detail with reference to the drawings. The same or corresponding elements within the drawings will be given the same reference numerals and the explanations therefor will not be repeated.

### A. Example Uses of the Control System

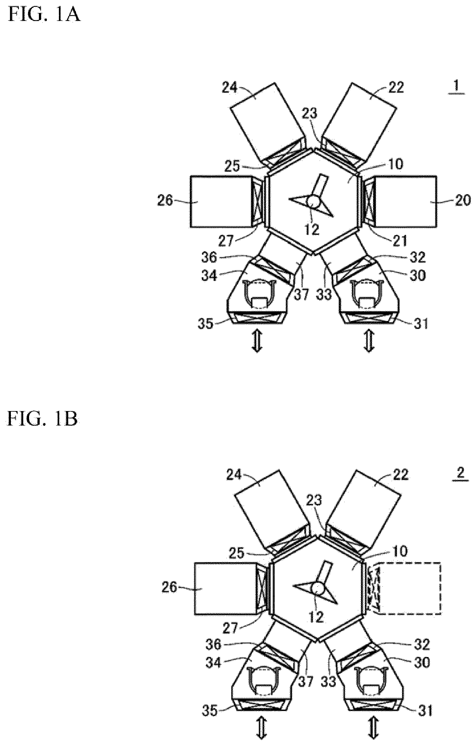

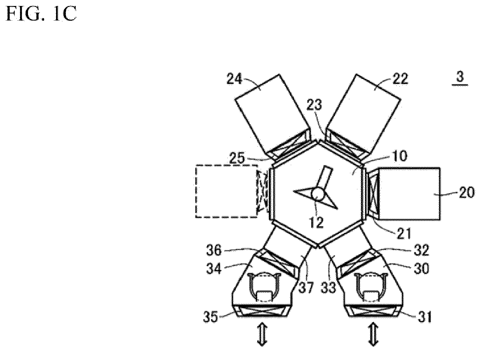

First, an example configuration of a device that can be controlled using a control system according to an embodiment of the invention is described. Figures 1A, 1B, 1C are schematic diagrams illustrating example configurations of a device that can be controlled using a control system according to an embodiment of the invention. Figures 1A, 1B, 1C each illustrate an example configuration of a multi chambered semiconductor manufacturing device. More specifically, Figure 1A illustrates the configuration of a semiconductor manufacturing device 1 provided with a plurality of process chambers 20, 22, 24, 26 with a transfer chamber 10 at the center. A substrate is processed in a vacuum within the process chambers. Between the process chambers 20, 22, 24, 26 and the transfer chamber 10 are gate valves 21, 23, 25, 27 that allow passage to or blocks off passage between the process chambers and the transfer chamber 10. A transfer robot 12 is provided in the transfer chamber 10. The transfer robot 12 places an unprocessed substrate in any of the process chambers 20, 22, 24, 26; alternatively the transfer robot 12 retrieves a processed substrate from the process chambers 20, 22, 24, 26.

The transfer chamber 10 is provided with load lock chambers 30 and 34. The load lock chambers 30 and 34 let a substrate for processing in or out of the transfer chamber 10 and maintain the vacuum inside the transfer chamber 10 and the process chambers 20, 22, 24, 26. More specifically, the load lock chamber 30 is connected to the transfer chamber 10 via a connecting part 33, with the gate valves 31 and 32 arranged at the entrance to and the exit from the transfer chamber 10. Similarly, the load lock chamber 34 is connected to the transfer chamber 10 via a connecting part 37, with the gate valves 35 and 36 arranged at the entrance to and the exit from the transfer chamber 10. The load lock chambers 30 and 34 are used interchangeably for letting a substrate being processed in and out of the transfer chamber 10.

Figure 1A illustrates the basic configuration of a semiconductor manufacturing device 1; Figure 1B and Figure 1C respectively illustrate a semiconductor manufacturing device 2 and the semiconductor manufacturing device 3 as variations of the basic configuration. More specifically, compared to the semiconductor manufacturing device 1 illustrated in Figure 1A, the semiconductor manufacturing device 2 illustrated in Figure 1B essentially excludes the first process chamber 20 and gate valve 21. Further, compared to the semiconductor manufacturing device 1 illustrated in Figure 1A, the semiconductor manufacturing device 3 illustrated in Figure 1C essentially excludes the fourth process chamber 26 and the gate valve 27.

When constructing a control system for the semiconductor manufacturing devices 2, 3 having these kinds of variation, it is desirable to obtain the maximum usage out of the resources from the control system for the semiconductor manufacturing device 1. In more practical terms, the desire is to be able to use the necessary programs and setup information used in building a control system oriented for a certain device to build a control system oriented for a device with a different configuration. Note that the data set required for building these types of control systems is collectively referred to as a "project" below.

For instance, the ability to manage the semiconductor manufacturing devices 1 to 3 illustrated in Figure 1A, 1B, and 1C using a single project is desirable. Alternatively, it is also desirable to have the ability to use a single project to manage a semiconductor manufacturing device that allows a certain process chamber to be physically removed while installing a different process chamber.

A possible means of addressing this need may be to create a project and then modify the project as appropriate to build a similar control system.

The embodiments provide a control device with a configuration that allows the backup process or the restore process to be carried out flexibly for control systems built using a project with shared modules as described above, or control systems adopted for devices whose configurations change based on the situation.

### B. Overall Example Configuration of the Control System

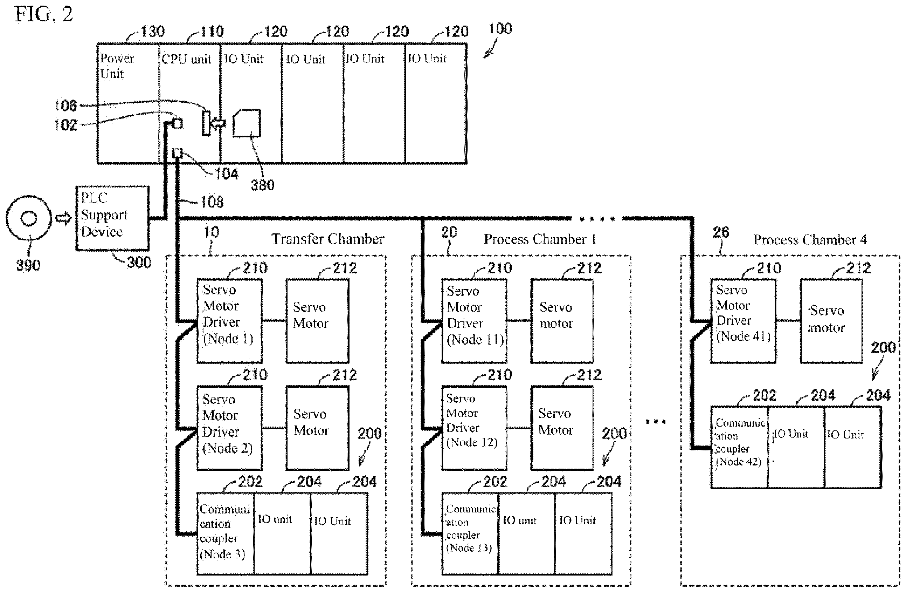

Before describing the details of the backup process and the restore process according to the embodiments, an overall example configuration of a control system according to the embodiments is described. Figure 2 is a schematic diagram illustrating an example configuration of the control system according to an embodiment of the invention. The control system illustrated in Figure 2 is built for the semiconductor manufacturing device 1 illustrated in Figure 1A.

Referring to Figure 2, the control system SYS includes a PLC 100, and a servo motor driver 210 and remote I/O terminal 200 connected to the PLC 100 via a network. In the embodiments, a field network 108 is adopted as the network. The PLC 100 functions as a master device that manages the communication processing on the field network 108. The master device may be called a parent station or a management station. In contrast to the PLC 100 which is the master device, the servo motor driver 210 and the remote IO terminal 200 are referred to as a slave device or referred to simply as a "device" and are connected to the PLC 100 through the field network 108. Assume that each of the slave devices on the field network 108 may be identified using a node number. Thus, the PLC 100 functions as the master device on the network and controls one or a plurality of slave devices over the aforementioned network.

Various kinds of Industrial Ethernet (Registered Trademark) can be used for this kind of field network 108. The Industrial Ethernet (Registered Trademark) that may be used includes EtherCAT (Registered Trademark), PROFINET (Registered Trademark), MECHATROLINK (Registered Trademark) -III, Powerlink, SERCOS (Registered Trademark)-III, CIP Motion, and the like. Moreover, field networks other than an Industrial Ethernet (Registered Trademark) may be used. DeviceNet, and CompoNet (Registered Trademark) are some examples of other field networks that may be used.

The PLC 100 includes a CPU unit 110, IO unit 120, and a power unit 130. The CPU unit 110 is a processing unit that executes most of the computations; additionally the CPU unit 110 executes computations on the basis of later-described programs, setup information and the like. The IO unit 120 exemplifies a functional unit configured to exchange data back and forth with the CPU unit 110 on a PLC internal bus (not shown). More specifically, the IO unit 120 executes the overall input and output processing, and manages the input and output of digitized (on and off) data. That is, the IO unit 120 gathers information representing a state where a sensor such as a detection switch detects an object (on), and a state where the object is not detected (off). Additionally, the IO unit 120 may output either a command to an output receiver such as a relay or actuator to initiate the activation thereof (on), or a command to deactivate the relay or actuator or the like (off).

A dedicated unit may be installed instead of, or in addition to the IO unit 120 to manage functions not supported by the IO unit 120 such as analog data input and output, temperature control, or communication via a specific communication protocol.

The power unit 130 supplies power of the appropriate voltage to the CPU unit 110 and the IO unit 120.

A support device 300 may be connected to the PLC 100 via a connection cable or the like. More specifically, a universal serial bus (USB) connector 102 may be provided in the PLC 100 and the CPU unit 110 for connecting the same with the support device 300. As is later described, the programs in the support device 300 that implement various kinds of processing may be stored and distributed through optical recording media such as a Compact Disk-Read Only Memory (CD-ROM) 390.

Additionally, the CPU unit 110 of the PLC 100 may be provided with a memory card interface 106 for receiving a memory card 380. Backup data (later described) and the like may be stored on the memory card.

Figure 2 illustrates an example of devices provided for controlling respectively the transfer chamber 10 and the process chambers 20, 22, 24, 26 which constitute the semiconductor manufacturing device 1 illustrated in Figure 1A. As an example, the transfer chamber 10 is controlled using two servo motor drivers 210 and a remote IO terminal 200. Assume that these devices are respectively identified with number 1, 2, and 3.

The servo motor drivers 210 are connected to the CPU unit 110 via the field network 108 and control the servo motor 212 in accordance with command values from the CPU unit 110.

The remote IO terminal 200 executes the overall input and output processing in the transfer chamber, similarly to the IO unit 120. More specifically, the remote IO terminal 200 includes a communication coupler 202 for processing the transmission of data over the field network 108, and includes one or more IO units 204.

The first process chamber 20 also includes two servo motor drivers 210 and a remote IO terminal 200, similarly to the transfer chamber 10. Assume that these devices are respectively identified with numbers 11, 12, and 13. In contrast, the fourth process chamber 26 includes one servo motor driver 210 and a remote IO terminal 200. Assume that these devices are respectively identified with numbers 41, and 42.

### C. Configuration of the CPU Unit 110

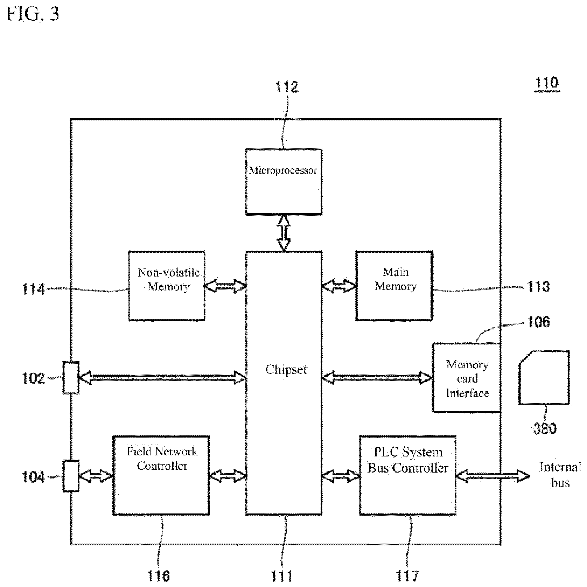

A configuration example of the CPU unit 110, which executes the majority of computations in the PLC 100, is described. Figure 3 is a schematic diagram illustrating a hardware configuration for the CPU unit 110 in the PLC 100 according to an embodiment of the invention.

Referring to Figure 3, in addition to the above-described USB connector 102, and the memory card interface 106, the CPU unit 110 in the PLC 100 includes a chipset 111, a microprocessor 112, a main memory 113, a non-volatile memory 114, a field network controller 116, and a PLC system bus controller 117. The chipset 111 and the other components are connected to each other via various buses.

Typically, the chipset 111 and the microprocessor 112 are configured based on a general-purpose computer architecture. That is, the chipset 111 sends the microprocessor 112 command codes sequentially in accordance with an internal clock. The microprocessor 112 interprets and executes these command codes in the order received. The chipset 111 exchanges internal data with the components connected thereto, and supplies the microprocessor 112 with the necessary command codes. The chipset 111 includes a function for caching the data and the like obtained through the computations executed in the microprocessor 112.

The CPU unit 110 includes a main memory 113 and a non-volatile memory 114 which function as storage units. The main memory 113 is a volatile storage area that stores the programs executed by the microprocessor 112, and may also be used as working memory when the programs are run. The non-volatile memory permanently stores the later described programs and setup information.

The USB connector 102 provides a means of connecting the support device 300 and the CPU unit 110. In general, the programs that may be transferred from the support device 300 and then executed are read in by the CPU unit 110 via the USB connector 102.

The CPU unit 110 includes a field network controller 116 and a PLC system bus controller 117 which function as communication units. These controllers transmit and receive data.

The field network controller 116 is connected to the field network 108 via a field network connector 104. The PLC system bus controller 117 is connected to the IO unit 120 (refer to Figure 2) and the like via an internal bus.

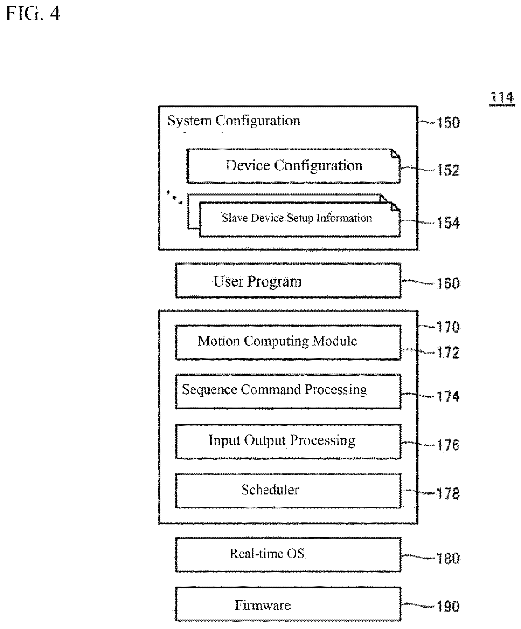

Figure 4 is a schematic diagram illustrating a software configuration of the CPU unit 110 in a PLC 100 according to an embodiment of the invention. Referring to Figure 4, the non-volatile memory 114 in the CPU unit 110 includes system configuration information 150, a user program 160, a library program 170, a real-time operating system (OS), and firmware 190.

The system configuration information 150 includes information defining a configuration and setup of a control system that includes the PLC 100. In practical terms, the system configuration information 150 includes device configuration information 152, and slave setup information 154.

The device configuration information 152 includes information indicating whether network connection of each of the slave devices registered as members on the field network 108 is active or inactive. That is, the device configuration information 152 includes information indicating the presence or absence of, and the connection type for a slave device managed by the PLC 100 acting as a controller. More specifically, the device configuration information defines the configuration of a control system such as is illustrated in Figure 2, i.e., what kind of slave devices are connected thereto, and what addresses (node numbers) are assigned to each of the slave devices. In other words, the device configuration information 152 includes information on the connection status of a slave device, and/or information on whether the connection has an active or an inactive status. An example of a data structure used for the device configuration information 152 is described later.

The slave setup information 154 contains setup information (parameters, assignment information, and the like) for each slave device necessary for executing a program on the PLC 100 (the CPU unit 110). In practical terms, the slave setup information 154 contains user programs and setup values for and associated with each slave device. That is, the slave setup information 154 contains the parameters necessary for controlling the aforementioned registered slave device. The slave device may also be provided with a unit internally for saving user programs and setup values. In this case, the slave setup information 154 can contain the user programs and setup values stored in each slave device.

A user uses the support device 300 to prepare the user program 160; the user program is created as desired depending on the machine or equipment that will be controlled. Typically such a user program 160 is transferred from the support device 300 to the PLC 100 (CPU unit 110).

The library program 170 contains the execution modules and subroutines that are required when the CPU unit 110 executes the user program 160. The library program 170 provides an environment in the PLC 100 (CPU unit 110) for executing the user program. More specifically, the library program 170 contains a motion computing module 172, a sequence command processing module 174, an input output processing module 176, and a scheduler 178.

The motion computing module 172 provides the functions that execute the motion computations that supply various commands to the servo motor driver 210. The sequence command processing module 174 provides the functions that process the commands for sequence control. The input output processing module 176 provides the functions that acquire external data and output internal data.

The scheduler 178 provides the functions that optimize the execution order of the plurality of tasks contained in the user program 160 in accordance with the respective priorities and interrupt levels.

Note, when the support device 300 is used to create a user program having the necessary libraries built-in (an execution program created using dynamic linking), there is no need to save the library program 170 on the PLC 100.

The real-time OS 180 provides an environment for executing the user program 160. More specifically, the real-time OS 180 cooperates with the scheduler 178 and optimizes the execution sequence of the user program 160 so that each task is completed within a predetermined processing time.

The firmware 119 is a primitive program run at the initial stage of the start up of the real-time OS 180. Typically, the backup process and the restore process according to the embodiments are implemented in the firmware 190.

### D. Configuration Example of the Servo Motor Driver 210

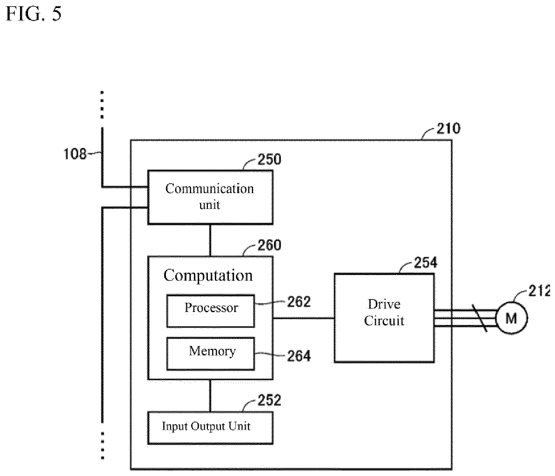

The configuration of the server motor driver 210 is described as an example of a slave device. Figure 5 is a schematic diagram illustrating a hardware configuration of a servo motor driver 210 according to an embodiment of the invention. The server motor driver 210 drives a server motor 212 in accordance with commands transmitted from the PLC 100 via the field network 108. More specifically, the server motor driver 210 includes a communication unit 250, and input output unit 252, a drive circuit 254, and a computation unit 260.

The communication unit 250 transmits and receives the data flowing on the field network 108. Namely, the communication unit 250 outputs the data received via the field network 108 to the computation unit 260, and transmits the data from the computation unit 260 via the field network 108.

Similarly to the I/O unit 120 (Figure 2), the input output unit 252 executes the overall input output processing in the server motor driver 210. Namely, the input output unit 252 collects information from various sensors such as detection switches and the like, and provides commands to various output targets such as relays and actuators.

The drive circuit 254 uses an external power source to generate a drive pulse sequence for driving the server motor 212 in accordance with internal commands from the computation unit 260. In practical terms, the drive circuit 254 includes an inverter circuit or a pulse width modulation (PWM) conversion circuit, or the like.

The computation unit 260 includes a processor 262, and a memory 264, and executes a majority of the computations that control the servo motor driver 210. The processor 262 executes computations in accordance with the programs and sets the values saved in the memory 264, and outputs the necessary commands and the computation results to the communication unit 250, the input output unit 252, and the drive circuit 254. The memory 264 saves various data necessary for the computations in the processor 262. The data saved in the memory 264 is transmitted thereto from the PLC 100 (CPU unit 110) via the field network 108.

Note, a majority of the components in the remote I/O terminal 200 is similar to those in the PLC 100, therefore there will be no detailed description therefor given here.

### E. Support Device 300

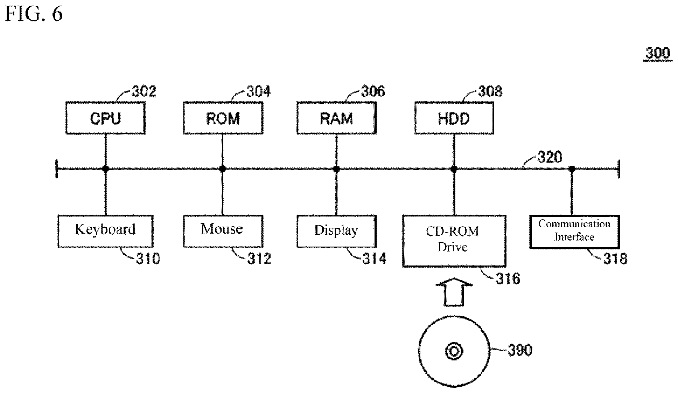

The support device 300 connected to the PLC 100 according to the embodiments is described next. Figure 6 is a schematic diagram illustrating a hardware configuration of a support device 300 configured for connection to a PLC 100 according to an embodiment of the invention. Typically, the support device 300 is configured using a general purpose computer.

Referring to Figure 6, the support device 300 includes a CPU 302 for executing the various programs including an operating system (OS); a read-only memory (ROM) 304 for storing a Basic Input Output System (BIOS) and various data; a RAM memory 306 which provides a working area for storing data necessary for executing the programs in the CPU 302; and a hard drive (HDD) 308 for permanently saving the programs and the like executed on the CPU 302.

The support device 300 further includes a keyboard 310 and a mouse 312 for accepting operational input from a user, and a display 314 for presenting information to the user. In addition, the support device 300 includes a communication interface (IF) 318 for communicating with the PLC 100 (CPU unit 110), and the like.

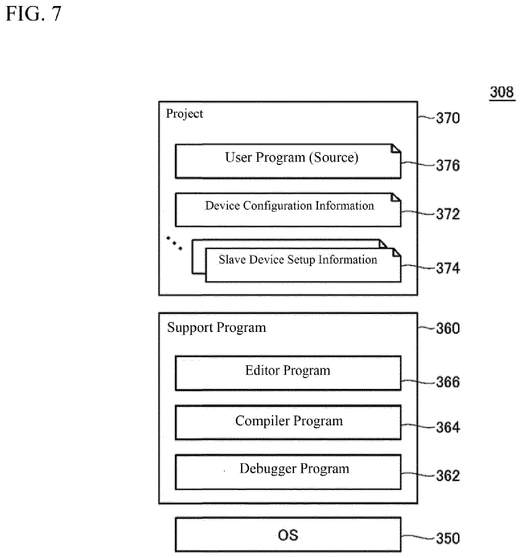

As is later described, a support program (refer to Figure 7) executed on the support device 300 is stored on and distributed via a CD-ROM 390. The CD-ROM drive 316 reads a program stored on the CD-ROM 390, and the program is stored on the hard drive 308, and the like. Alternatively, the support device may be configured to download a program from an upper level host computer, and the like through the network.

Each of the components making up the support device 300 is connected to each other via a bus 320.

Figure 7 is a schematic diagram illustrating a software configuration of a support device 300 configured for connection to a PLC 100 according to an embodiment of the invention. Referring to Figure 7, the hard drive 308 in the support device 300 typically stores an OS 350, a support program 360, and a project 370.

The OS 350 provides an environment for executing programs in the CPU. The support program 360 controls the processing carried out in the PLC 100. A support program 360 commonly contains a debugging program 362, a compiler program 364, and an editor program 366.

The debugger program 362 evaluates the validity of the created user program and assists in correcting any defects. The compiler program 364 generates an executable user program from the created user program (source program). The editor program 366 provides an interface for generating the user program.

The project 370 contains the programs and set up values necessary for building a given control system. More specifically, the project 370 contains a user program 376, the device configuration information 372, and the slave device setup information 374 for each slave device. These data are transferred from the support device 300 to the PLC 100 and stored as the user program 160, the device configuration information 152, and the slave device setup information 154 respectively.

### F. Building the Control System

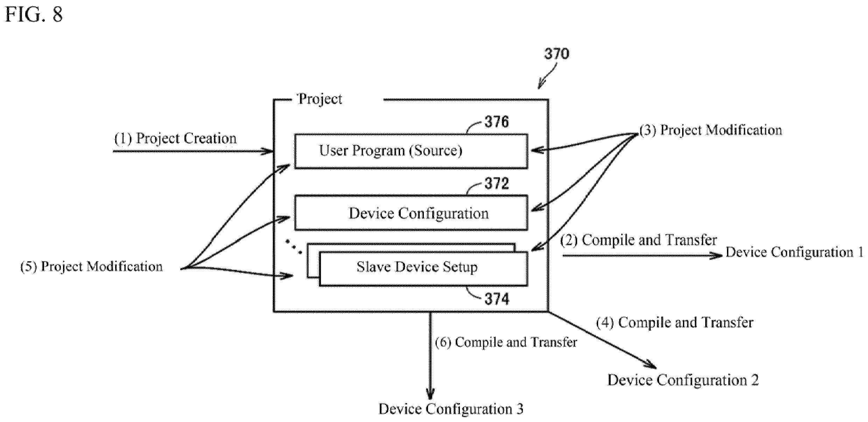

Next is described an example procedure for building a control system for a device configured similarly to the device illustrated in Figures 1A through 1C. Figure 8 is a schematic diagram for describing the process of building a control system according to an embodiment of the invention.

Referring to Figure 8, first, a user (system developer) creates a project ((1) Project Creation) establishing a base device configuration. For example the user creates a project for the semiconductor manufacturing device 1 illustrated in Figure 1A. In more practical terms, the user creates a user program 376 (source program) implementing the processing for a specific objective; the user also establishes the device configuration information 372 and the slave device setup information 374 for the slave devices that the control system will contain.

Once this series of design and creation is complete, the user program 376 in the project 370 is compiled and transferred to the control system for the device configuration 1 along with the device configuration information 372, and the slave device setup information 374; ((2) Compilation and Transfer).

Next, the user updates a previously created project 370 in accordance with a device configuration 2 that is similar to the device configuration 1 ((3) Project Update). In more concrete terms, the user updates the device configuration information 372 and the slave device setup information 374 in accordance with the differences in the system configurations. Alternatively the user changes the logic of the user program 376 in accordance with the differences in the required processing details.

Once the update step is complete, the user program 376 in the project 370 is compiled and transferred to the control system for the device configuration 2 along with the device configuration information 372, and the slave device setup information 374; ((4) Compilation and Transfer).

In the same manner, the user updates the previously created project 370 in accordance with a device configuration 3 that is similar to the device configuration 1; ((5) Project Update). In more concrete terms, the user updates the device configuration information 372 and the slave device setup information 374 in accordance with the differences in the system configurations. Alternatively the user changes the logic of the user program 376 in accordance with the differences in the required processing details. Once the update step is complete, the user program 376 in the project 370 is compiled and transferred to the control system for the device configuration 2 along with the device configuration information 372, and the slave device setup information 374; ((4) Compilation and Transfer).

Thus, using the support device 300 (support program 360) according to the embodiments facilitates building control systems for similar device configurations.

As illustrated in Figure 1A, the device configuration information 372 for a slave device that is present in the device configuration 1 but not present in the device configuration 2 may be set to null to disable any processing related thereto. The device configuration information 372 is ultimately stored in the PLC 100 as the device configuration information 152. That is, the variations between the device configurations are integrated into the project.

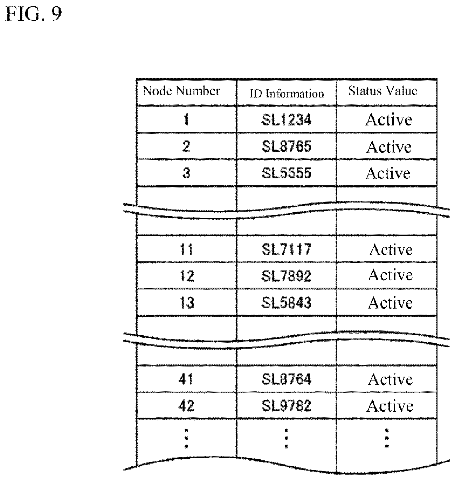

Figure 9 is a schematic diagram illustrating an example of a data structure representing the device configuration information 372 according to an embodiment of the invention. Referring to Figure 9, the device configuration information 372 includes information representing whether the network connection for each of the slave devices registered as members on the field network 108 is active or inactive. That is, the device configuration information 372 illustrated in Figure 9 contains a plurality of entries separated by node numbers on the field network 2. Each of the entries contains identification information for identifying a slave device, and information indicating whether the network connection thereof is active or inactive. Note that the identification may contain an equipment number for the slave device.

Here, a network connection indicated as "inactive" implies that the PLC 100 as the master device, will ignore data communication with the slave device (don't care). The PLC 100 will not assess whether or not a slave device having identification information that matches the registered identification information is connected to the field network 2 when the slave device is in the inactive state. Whereas, a network connection indicated as "active" indicates that the PLC 100 as the master device, will carry out data communication with the slave device. Therefore PLC 100 will determine there is an error when a slave device is listed in the active state but no slave device having identification information that matches the registered identification information connected to the field network 2.

In other words, setting the status of a given slave device to inactive will not generate an error even when the aforementioned slave device is not connected to the field network 2. Thus, the variations between device configurations may be integrated within a project using this active or inactive setting.

Next, an example process of building a control system is described to provide a concrete example.

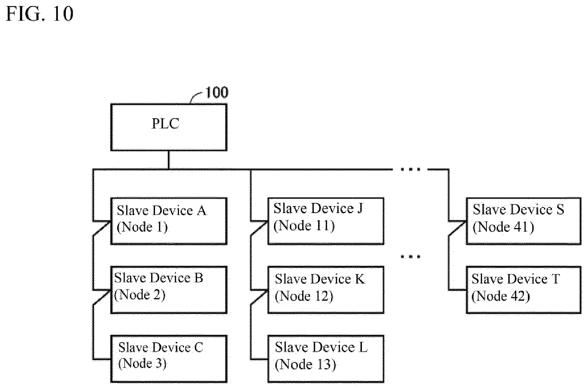

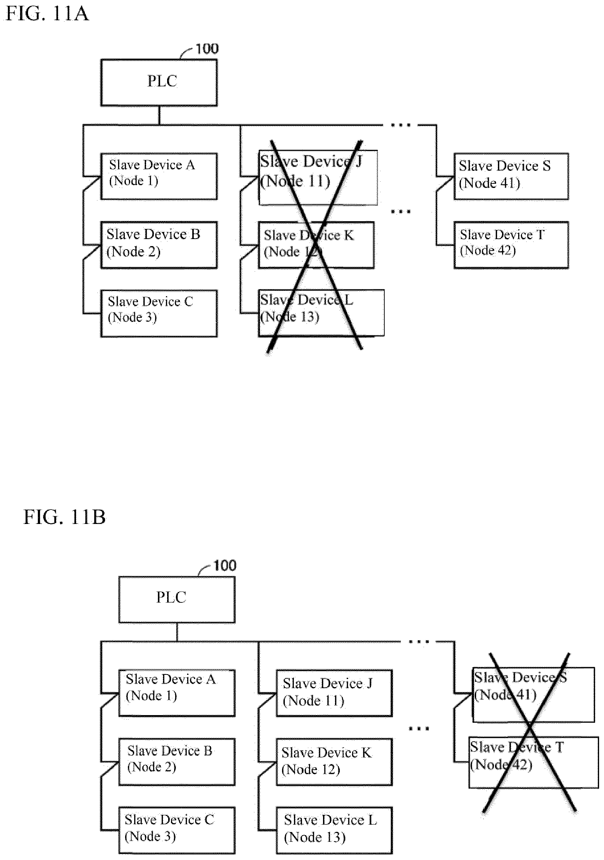

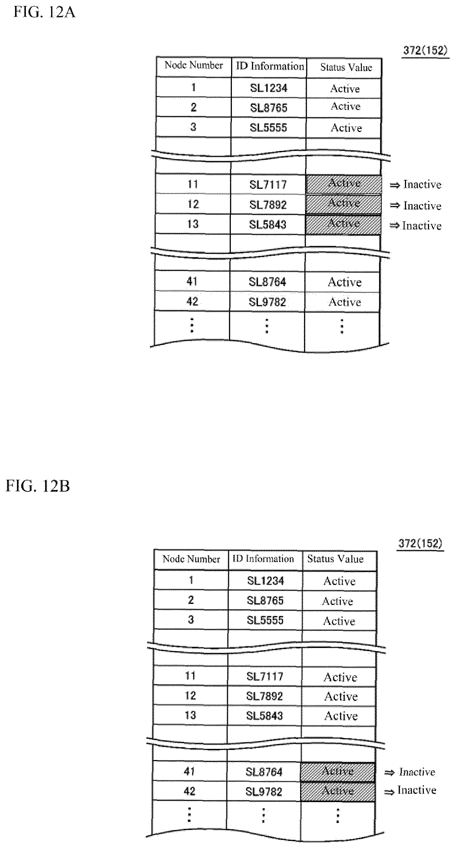

Figure 10 illustrates an example of a device configuration 1 for the device illustrated in Figure 8. Figures 11A and 11B illustrate examples of device configurations 2 and 3 for the device illustrated in Figure 8. Note that the example device configurations illustrated in Figures 10, 11A, and 11B are similar to the control system illustrated in Figure 2. Figure 12 illustrates an example of the details modified within the device configuration information 372 illustrated in Figure 9.

In the device configuration 1 illustrated in Figure 10, slave devices A to C (nodes 1 to 3), slave devices J to L (nodes 11 to 13), and slave devices S and T, (nodes 41 and 42) are the slave devices connected to the PLC 100 which functions as the master device. Compared to the device configuration 1 illustrated in Figure 10, the slave devices J to L are excluded from the device configuration 2 illustrated in Figure 11A, and the slave devices S and T are excluded from the device configuration 3 illustrated in Figure 11B.

The device configuration 1 illustrated in Figure 10 is set up like the device configuration information 372 illustrated in Figure 9. Whereas, the device configuration 2 illustrated in Figure 11A is set up like the device configuration information 372 illustrated in Figure 12A. Namely, the status values change from active to inactive for the slave devices J to L that are not present therein. Similarly, the device configuration 3 illustrated in Figure 11B is set up like the device configuration information 372 illustrated in Figure 12B. Namely, the status values change from active to inactive for the slave devices S, T that are not present.

As illustrated in Figure 10 and Figure 11, there is no need to delete the actual identification information for the slave device from the device configuration information 372, even if that slave device is not physically present in the configuration. Instead, it is sufficient to merely set the status value of a slave device that is not present to null. Adopting this kind of device configuration information 372 facilitates configuring a control system for a plurality of similar device configurations. Alternatively, this kind of device configuration information 372 facilitates modifying the program executed on the PLC 100 for cases where the device configuration can change at any time in accordance with the situation.

That is, the user (system developer) creates a basic project including all the device configurations, and sets the device configuration information 372 to selects whether or not each device is used. This may be implemented by the user modifying the device configuration information 372 as appropriate in accordance with the device configuration of a device to be controlled, and forwarding the device configuration information 372 to the PLC 100 (CPU unit 110).

However, given that the above-described method requires modifying the device configuration information 372 using the support device 300, this method may be complicated for an end-user with little programming skill. In this case, the control device may be configured to include a module (function) that modifies the device configuration information 372 dynamically, so that the device configuration information 372 may be appropriately modified using the user program in accordance of the device configuration. At this time, the modification to the device configuration is carried out by the user (operator) manipulating a display device and the like to send instructions to the PLC 100. Adopting such a method of dynamically modifying the device configuration information 372 allows the device configuration to be modified without stopping the control system.

### G. Outline of the Backup Process and the Restore Process

Next is described an outline of the backup process and the restore process implemented in the PLC 100 according to an embodiment of the invention.

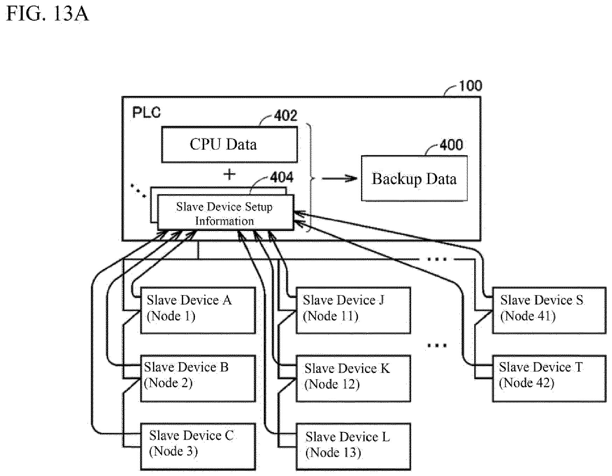

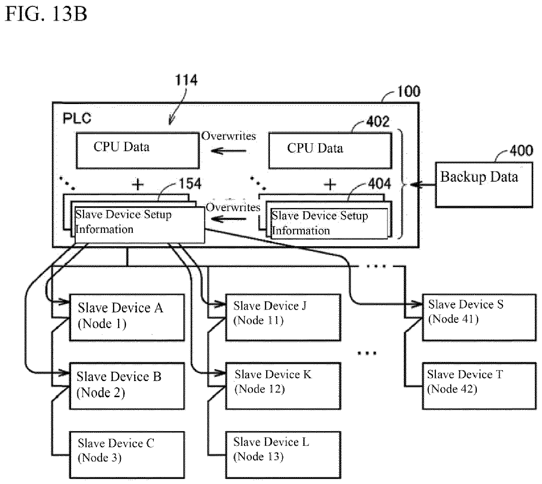

Figures 13A and 13B are schematic diagrams for describing an outline of the backup process and the restore process implemented in a PLC 100 according to an embodiment of the invention. Figure 13A illustrates an outline of the backup process; Figure 13B illustrates an outline of the restore process.

### g1: Example Uses of the Backup Process and the Restore Process

Overall, issues may often occur in devices or equipment. For instance, the power is shut off for consecutive days, and the device or equipment does not operate properly for some reason when the power is turned on at the end of this period. Although a mechanical failure could be one possible reason, for instance, other reasons may be that the data that should have been saved using battery power may have disappeared, or an upper level computing device may have overwritten the data at an unintended time.

In these kinds of cases, a user (i.e., an end user unable to perform complicated tasks using the support device 300) may use the backup data acquired previously to reinstate the data that was lost (restore process). That is, the backup data utilized in an embodiment according to the invention may be used to resolve issues in the control system.

A simple method may be used to implement this function. For instance, a memory card 380 such as a Secure Digital (SD) memory card may be inserted into the PLC 100, which triggers the start of the restore process. Alternatively, a button provided on the PLC 100 may be operated to start the restore process.

### G2: Backup Process

First, the backup process illustrated in Figure 13A is described. During the backup process, the data saved in the PLC 100 (CPU unit 110) and the data saved in each slave device is used to generate the backup data 400. The backup data created is stored in the non-volatile memory 114 in the CPU unit 110 or the memory card 380. Alternatively, the CPU unit 110 transfers the backup data 400 to the support device 300 and the support device 300 saves the backup data 400 internally or on various kinds of recording media connected thereto.

More specifically, the backup data 400 is created on the basis of CPU data 402, which is a copy of the data stored in the non-volatile memory 114 in the CPU unit 110 (refer to Figure 3), and slave device setup information 404, which is a copy of the data stored on each slave device. Note, the data included in the backup data 400 is not limited to these, and may include for instance data stored in the main memory 113 and the CPU unit 110 (refer to Figure 3).

The following are examples of CPU data 402 contained in the backup data 400.

- The user program or setup values (parameters) stored in the PLC 100 (CPU unit 110);
- the device configuration information 152 stored in the PLC 100 (CPU unit 110); and
- the network connection information (active or inactive) for each device stored in the PLC 100 (CPU unit 110).

The following are examples of slave device setup information 404 contained in the backup data 400.

- The user program or setup values (parameters) stored in the slave device.

Thus, the backup data 400 contains the data saved in the PLC 100 (CPU unit 110), which is the master device, and/or the data saved in the slave device. The PLC 100 (CPU unit 110) may also be configured to carry out a backup process by using the data on the memory card 380 and the data from the slave device to generate the backup data 400.

### g3: Restore Process

First, the restore process illustrated in Figure 13B is described. During the restore process, the PLC 100 (CPU unit 110) generates CPU data 402 and slave device setup information 404 from a preliminarily prepared backup data 400, and overwrites contents of the non-volatile memory 114 with the CPU data 402. The slave device setup information 154 saved in the PLC 100 (CPU unit 110) is overwritten with the slave device setup information 404. The PLC 100 (CPU unit 110) also forwards the contents of the slave device setup information 404 (the overwritten slave device setup information 154) to the relevant slave device as needed.

As above described, the restore process may be triggered by (1) the insertion of a memory card 380 containing the backup data 400 into the CPU unit 110; (2) the execution of a predetermined operation (for instance, pressing a button provided on the CPU unit 110); and (3) an explicit instruction to the support device 300.

The CPU unit 110, which corresponds to a processing unit according to the embodiments, is thus configured to use the backup data 400 containing the setup information for each slave device to execute a restore process. Additionally, the restore process according to the embodiments includes processing where the PLC 100 (CPU unit 110) transmits the necessary data to the slave device that is being restored.

### H. Background Art and Issues Therewith

Next, the background art related to the embodiments and the issues in the background art is described.

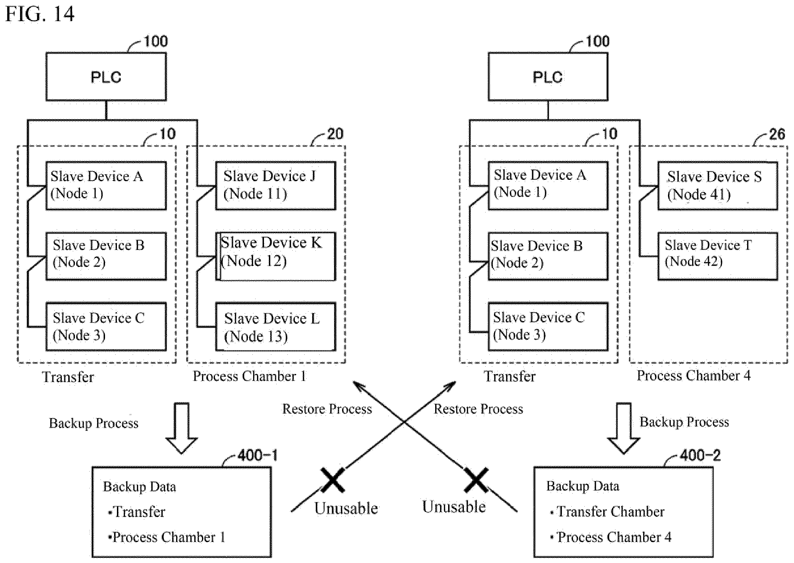

Figure 14 is a schematic diagram for describing the backup process and the restore process implemented in an embodiment of the invention. Figure 14 illustrates two pieces of equipment with mutually different device configurations. That is, suppose a device configuration containing a transfer chamber 10 and a first process chamber 20, and a device configuration containing the transfer chamber 10 and a fourth process chamber 26. Although the number of slave devices is kept simple for the convenience of explanation, more slave devices may be included in either of these device configurations.

The backup data 400-1 acquired for a control system containing the transfer chamber 10 and the first process chamber 20 includes the setup information for the transfer chamber 10 and the first process chamber 20, and a program. The backup data 400-2 acquired for a control system containing the transfer chamber 10 and the fourth process chamber 26 includes the setup information for the transfer chamber 10 and the fourth process chamber 26, and a program.

When a restore process is executed using the backup data 400, in the related art, the system assumes that the device configuration for the control system to be restored is the same as the device configuration when the backup data was generated. Therefore, while the control systems share the setup information for the transfer chamber 10 and the program, the restore process cannot be executed for the control system containing the transfer chamber 10 and the fourth process chamber 26 using the backup data 400-1. Similarly, a restore process cannot be executed for the control system containing the transfer chamber 10 and the first process chamber 20 using the backup data 400-2.

Thus the related art does not consider changes to the device configuration in a control system, and the device configuration between the backup process and the restore process must be the same. In other words, if the device configurations are different an error occurs at the start of or during the restore process.

Note, the support device 300 may be used to force the device configurations to match and to select a portion of the data contained in the backup data 400 to use during the restore process; however, this method is extremely troublesome, and there is the increased possibility that the restore process will fail.

Accordingly, there is generally the need to generate and manage the backup data for each of the control systems.

### I. Outline of a Possible Solution

The embodiments aim to address this kind of problem. More specifically, when executing the restore process, the CPU unit 110 which corresponds to the processing unit reads the aforementioned device configuration information and identifies a slave device that can be included in the data and is either listed in the device configuration information read as having a network connection that is valid, or exists on the network, and executes the restore process using the setup information corresponding to the identified slave device. That is, the CPU unit 110 according to the embodiments selectively extracts the program or the setup information from the backup data for the slave device validly contained in the control system being restored, and executes the restore process.

In other words, the CPU unit 110 according to the embodiments selectively executes the restore process for a slave device with an active network connection, and slave device existing on the network, even if the device configuration differs from the time the backup data 400 was created.

Here, "a slave device with an active network connection" typically implies that the slave device is connected to the field network 108. This includes a slave device with a status value set to "active" in the device configuration information 372 illustrated in Figure 9 (or, the device configuration information 152). Alternatively, this may also include a slave device where the CPU unit 110 determines that the slave device is able to operate normally as a result of performing an actual query over the field network 108.

Furthermore, " a slave device existing on the network" typically means a slave device that is actually connected to the field network 108. In this case, the status value for the slave device in the device configuration information 372 (or the device configuration information 152) has no effect. That is, as along as the slave device is connected to the field network 108, the operational status thereof and the like have no effect, and the slave device is included as a device to be restored.

Various examples of adopting a particular control system are described below in the form of the first through third embodiments. However, the first through third embodiments also include the above-described basic processing.

### J. First Embodiment

The first embodiment is explained with reference to the above-described Figure 14. The first embodiment is adopted in this case where two pieces of equipment have mutually different device configurations.

### j1: Outline of the Processing in the First Embodiment

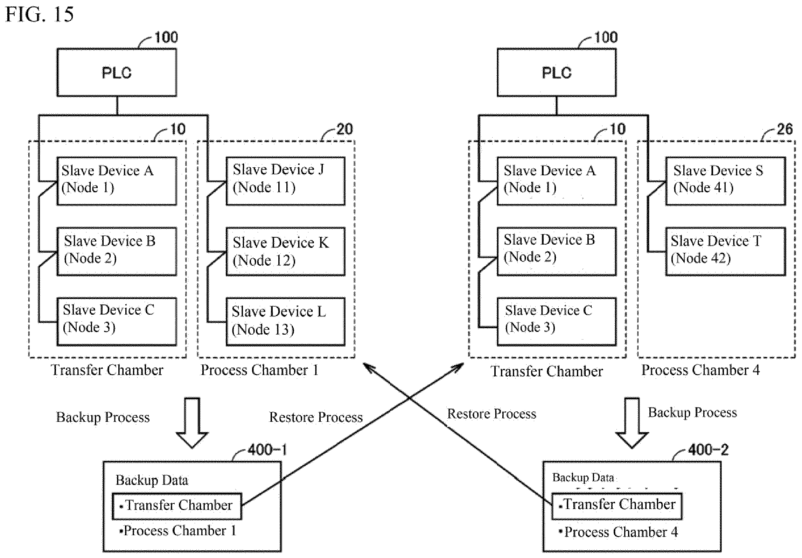

Figure 15 is a schematic diagram for describing the backup process and the restore process implemented in the first embodiment. Similarly, to the above-described Figure 14, in Figure 15 the backup data 400-1 is created for a control system controlling a transfer chamber 10 and a first process chamber 20, and the backup data 400-2 is created for a control system controlling a transfer chamber 10 and a fourth process chamber 26.

In the first embodiment, only the data for the corresponding slave device is restored from the backup data 400, even when the current device configuration is different from when the backup data 400 was created (i.e., the device configuration is not the same between the execution of the backup process and the execution of a restore).

Figure 15 illustrates an example of executing a restore process for the control system built for a transfer chamber 10 and the fourth process chamber 26 using the backup data 400-1 created for the control system built for the transfer chamber 10 and the first process chamber 20. At this point the PLC 100 (CPU unit 110) extracts the setup information for the transfer chamber 10 and/or the program from the backup data 400-1 and executes the restore process.

Figure 15 also illustrates an example of executing a restore process for the control system built for the transfer chamber 10 and the first process chamber 20 using the backup data 400-2 created for the control system built for the transfer chamber 10 and the fourth process chamber 26. At this point the PLC 100 (CPU unit 110) extracts the setup information for the transfer chamber 10 and/or the program from the backup data 400-2 and executes the restore process.

In this manner the PLC 100 (CPU unit 110) according to the first embodiment selects to restore the slave device with an active network connection and/or the slave device existing on the network when executing a restore from the backup data 400. That is, the PLC 100 (CPU unit 110) does not execute the restore process for a slave device that does not have an active network connection and/or a slave device that does not exist on the network.

In other words, the PLC 100 (CPU unit 110) according to the first embodiment will not halt processing after the start of or during the restore process when a slave device exists for which the restore process will not be executed (or, for which the restore process cannot be executed).

The PLC 100 may be configured to not output an error for a slave device that was not restored. However, when it is preferable to receive a report that a slave device was not restored, the PLC 100 may be configured to provide the user with notification of the slave device that was not restored. For instance, the methods of notification may include: outputting the notification to a log file associated with the restore process; providing an alert on the screen of a connected support device 300; turning on, or turning off a display device installed in the slave device (e.g., a light emitting diode: LED indicator, and the like); and providing audio guidance through the support device 300 or the CPU unit 110.

### j2: Processing Procedure

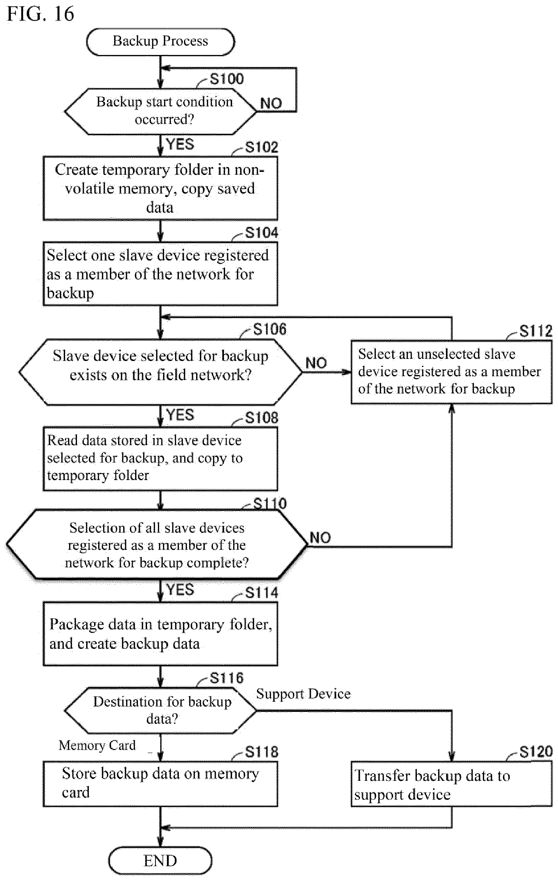

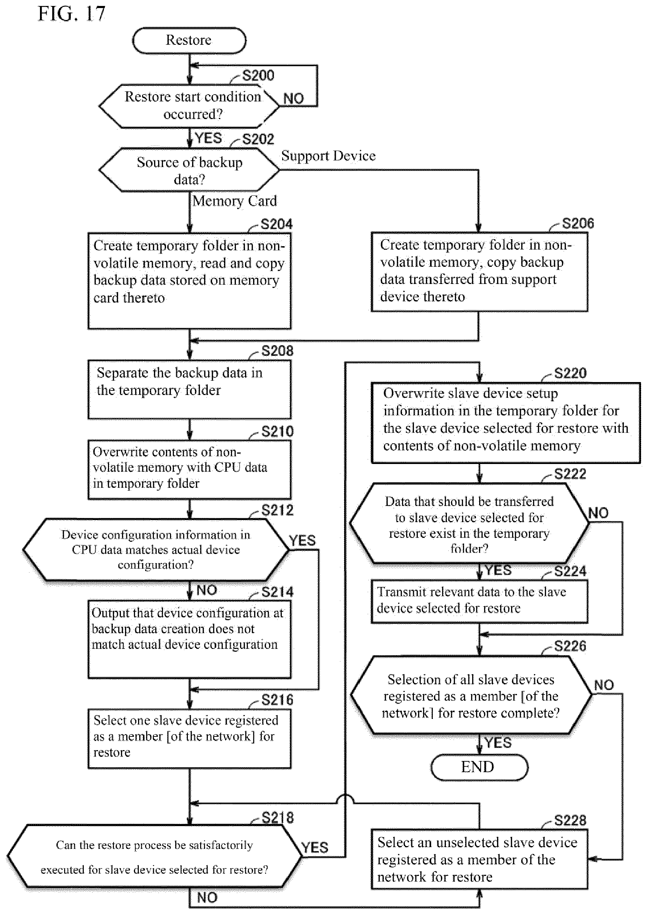

Next the backup process and the restore process according to the first embodiment is described. Figure 16 is a flowchart illustrating the flow of the backup process according to the first embodiment. Figure 17 is a flowchart illustrating the flow of the restore process according to the first embodiment. Each of the steps illustrated in Figure 16 and Figure 17 is typically implemented by execution of the firmware 190 (refer to Figure 4) on the microprocessor 112 in the CPU unit 110 (refer to Figure 3). However, all or a portion of these processes may be realized using an integrated circuit such as an Application Specific Integrated Circuit (ASIC) and the like.

Referring to Figure 16, the microprocessor 112 determines whether or not a backup start condition exists (step S100). This backup start condition may include an explicit instruction from the support device 300, the insertion of the memory card 380, or the like. When a backup start condition does not exist (NO, at step S100), the processing at step S100 is repeated.

Whereas, when a backup start condition does exist (YES, step S100), the microprocessor 112 creates a temporary folder in the non-volatile memory 114, and copies the data stored in the non-volatile memory 114 thereinto (step S102). The data stored in the non-volatile memory 114 includes the CPU data 402 and the slave device setup information 404.

The microprocessor 112 then references the device configuration information 152 and selects one slave device registered as a member on the field network 108 to back up (step S104). The microprocessor determines whether or not the slave device selected for backup exists on the field network 108 (step S106). When the slave device selected for backup exists on the field network 108 (YES at step S106), the microprocessor 112 reads the data storage in the slave device selected for backup via the field network 108, and copies the data read into this temporary folder (step S108).

The microprocessor determines whether or not the selection for backup for all the slave devices registered as members on the field network 108 is complete (step S110). When the selection for backup for all the slave devices registered as members on the field network 108 is incomplete (NO at step S110), or a slave device selected for backup does not exist on the field network 108 (NO at step S106), the microprocessor 112 selects an unselected slave device registered on the field network 108 for backup (step S112). The processing at and after step S106 is then repeated.

Whereas, when the selection for backup for all the slave devices registered as members on the field network 108 is complete (YES at step S110), the collection of the data required for creating the backup data 400 is complete. In basic terms, the data inside the temporary folder may be output as is as the backup data 400. However, in the first embodiment the backup data 400 is packaged, and the package file resulting therefrom output as the backup data 400. That is, the microprocessor 112 packages the data inside the temporary folder, and generates the backup data 400 (step S114).

The microprocessor 112 then determines a destination to output the backup data (step S116). Note that the support device 300 may preliminarily provide notice of a destination for output of the backup data 400, or the destination may be determined on the basis of the setting of a dip switch and the like provided on the CPU unit 110.

When the destination for the backup data 400 is the memory card 380 ("memory card" at step S116), the microprocessor 112 stores the backup data 400 on the memory card 380 (step S118). The backup process is then terminated.

Whereas, when the destination for the backup data 400 is the support device 300 ("support device" at step S116), the microprocessor transfers the backup data 400 to the support device 300 (step S120). The backup process is then terminated.

Referring to Figure 17, the microprocessor 112 determines whether or not a restore start condition exists (step S200). This restore start condition may include an explicit instruction from the support device 300, the insertion of the memory card 380, or the like. If a restore start condition does not exist (NO, at step S200), the processing at step S200 is repeated.

Whereas, when a restore start condition exists (YES at step S200), the microprocessor determines the source of the backup data 400. Note that the source of the backup data 400 may be determined in association with the existing restore start condition.

When the source for the backup data 400 is the memory card 380 ("memory card" at step S202), the microprocessor 112 creates a temporary folder in the non-volatile memory 114, reads the backup data stored on the memory card 380 and copies the data to the temporary folder (step S204).

Whereas, when the source for the backup data 400 is the support device ("support device" at step S202), the microprocessor 112 creates a temporary folder in the non-volatile memory 114, and copies the data transferred from the support device 300 to the temporary folder (step S206).

The microprocessor 112 then takes apart the backup data 400 in the temporary folder (step S208). Taking apart the data in the temporary folder thereby restores the CPU data 402 and the slave device setup information 404. The microprocessor 112 overwrites the contents of the non-volatile memory 114 with the CPU data 402 in the temporary folder (step S210).

The microprocessor 112 then compares the device configuration information 152 contained in the CPU data 402 with the current device configuration (actual device configuration), and determines whether or not both configurations match (step S212). When the device configuration information 152 and the actual device configuration do not match (NO at step S212), the microprocessor 112 outputs information indicating that the device configuration at the time the backup data 400 was created and the actual device configuration do not match (step S214). For instance, these types of output may include: outputting the details to a log file associated with the restore process; providing an alert on the screen of the connected support device 300; providing audio guidance through the support device 300 or the CPU unit 110.

When the device configuration information 152 and the actual device configuration match (YES at step S212), the processing step S214 is skipped.

The microprocessor 112 then references the device configuration information 152 contained in the CPU data 402 obtained from the backup data 400 and selects one slave device registered as a member on the field network 108 to back up (step S216). The microprocessor 112 then determines whether or not the restore process can be satisfactorily executed for the slave device selected for the restore (step S218). In more concrete terms, the microprocessor 112 determines whether the slave device selected for the restore has an active network connection, and/or whether the slave device selected for the restore exists on the field network 108.

When the microprocessor 112 determines that the restore process can be satisfactorily executed for the slave device selected for the restore (YES at step S218), the microprocessor 112 overwrites the contents of the non-volatile memory 114 with the slave device setup information 404 in the temporary folder associated with the slave device selected for the restore (step S220). The microprocessor 112 then determines whether or not data that must be transferred (e.g., a program, and the like) exists in the temporary folder for the slave device selected for the restore (step S222). Namely, among slave devices, there are slave devices that save the user program or set values internally; the CPU unit 110 transmits the necessary data (user program, or setup values) to those kinds of slave devices. When the data that must be transferred to the slave device selected for the restore exists in the temporary folder (YES at step S222), the microprocessor 112 transmits the relevant data to slave device selected for the restore via the field network 108 (step S224). When the data that must be transferred to the slave device selected for the restore does not exist in the temporary folder (NO at step S222), the processing at step S224 is skipped.

The microprocessor determines whether or not the selection for restore for all the slave devices registered as members on the field network 108 is complete (step S226). When the selection for restore for all the slave devices registered as members on the field network 108 is incomplete (NO at step S226), or the microprocessor 112 determines that a restore process cannot be satisfactorily executed for a slave device selected for the restore (NO at step S218), the microprocessor 112 selects an unselected slave device registered on the field network 108 for restore (step S228). The processing at and after step S218 is then repeated.

Whereas, when the selection for restore for all the slave devices registered as members on the field network 108 is complete (YES at step S226), the restore process is complete.

### j3: Advantages

According to the first embodiment, when there is a need to recover from some kind of abnormality that occurs in a plurality of equipment (control systems) that share devices, the shared devices at least may be restored using the backup data created for the other equipment (control systems). Therefore, this further simplifies the restore process to use for recovering a control system.

### K. Second Embodiment

Described is an example of adopting the second embodiment, whereby a restore process may be additionally executed when a slave device (device) that is absent at the time of the restore process is subsequently added. Namely, the second embodiment automatically restores a slave device that is added when the slave device was absent at the time of the restore process.

### k1: Outline of the Process

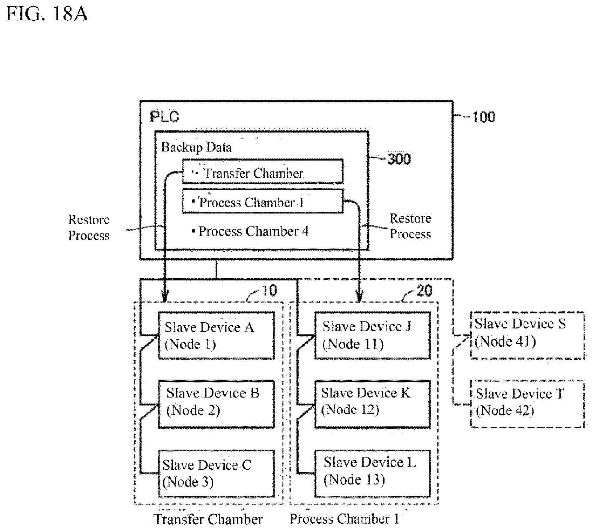

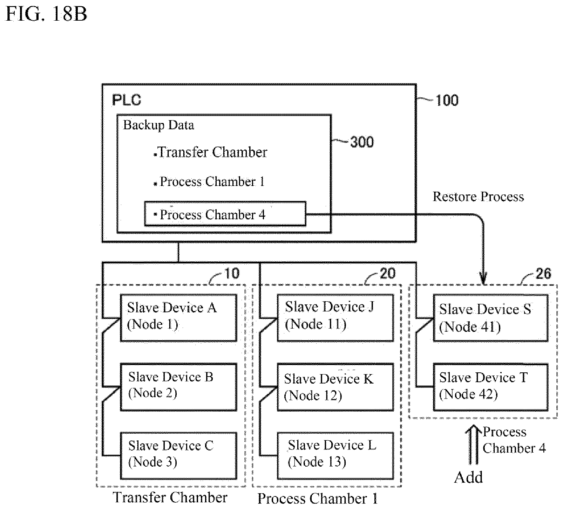

Figures 18A and 18B are schematic diagrams for describing the restore process implemented in the second embodiment. In the device configuration illustrated in Figure 18A, slave devices A to C (transfer chamber 10) and slave devices J to L (first process chamber 20) are slave devices connected to the PLC 100 which functions as the master device. At this point, the slave devices S and T (fourth process chamber 26) which should be connected are assumed to be absent. However, the backup data 400 contains the data for all the slave devices (transfer chamber 10, first process chamber 20, and fourth process chamber 26).

In the device configuration illustrated in Figure 18A, the slave devices A to C (transfer chamber 10) and the slave devices J to L (first process chamber 20) are selected as the devices to restore. That is, the restore process is executed using the data in the backup data 400 that is for the transfer chamber 10 and the first process chamber 20.

The slave devices S and T (fourth process chamber 26) are subsequently added as illustrated in Figure 18B. This kind of situation may occur when, for instance, the equipment for the fourth process chamber 26 is shut down for maintenance or repair, or when those devices have been removed.

The modification from the device configuration illustrated in Figure 18A to the device configuration illustrated in Figure 18B triggers the execution of an additional restore process in the second embodiment. That is, the restore process is executed using the data in the backup data 400 that is for the fourth process chamber 26.

Even an end user with little knowledge may satisfactorily carry out the restore process executed in the second because the restore process is executed automatically with the addition of a slave device. That means that without the automatic restore process implemented in the second embodiment, the user would need to consider the modified device configuration, individually select the relevant data on the support device 300, and determine whether there is a need to perform the restore process. The issue is that this procedure is extremely inconvenient, and may not be suitably carried out depending on that user's level of knowledge.

Typically the backup data 400 is preliminarily saved in the non-volatile memory 114 of the CPU unit 110 (refer to Figure 3). Alternatively, the backup data 400 may be saved in the memory card 380 inserted into the CPU unit 110.

The additional restore process illustrated in Figures 18A and 18B is typically executed when the CPU unit 110 detects that a slave device has been added, and/or that the network connection for a slave device changed from null to valid. Namely, when at least any of the slave devices change to an active network connection, and any of the slave devices come to exist on the field network 108, the CPU unit 110 restores the corresponding slave device setup information 154 contained in the backup data 400.

### k2: Processing Procedure

Next the backup process and the restore process according to the second embodiment is described. The backup process is identical to the process in the above-described first embodiment (refer to Figures 16A and 16B), and thus an explanation thereof is not repeated here.

The restore process may conceivably be divided into a case where an additional restore is executed only when the restore process has not been executed for a slave device added (detailed below under "Execution of the Additional Restore Process Only When Restore Not Yet Executed"), and a case where a restore is always executed for any kind of slave device when the slave device is added (detailed below under "Continuous Execution of the Additional Restore Process"). The processing in each case is described below in detail.

### k3: The Restore Process (Case 1: Execution of the Additional Restore Process Only When Not Yet Executed)

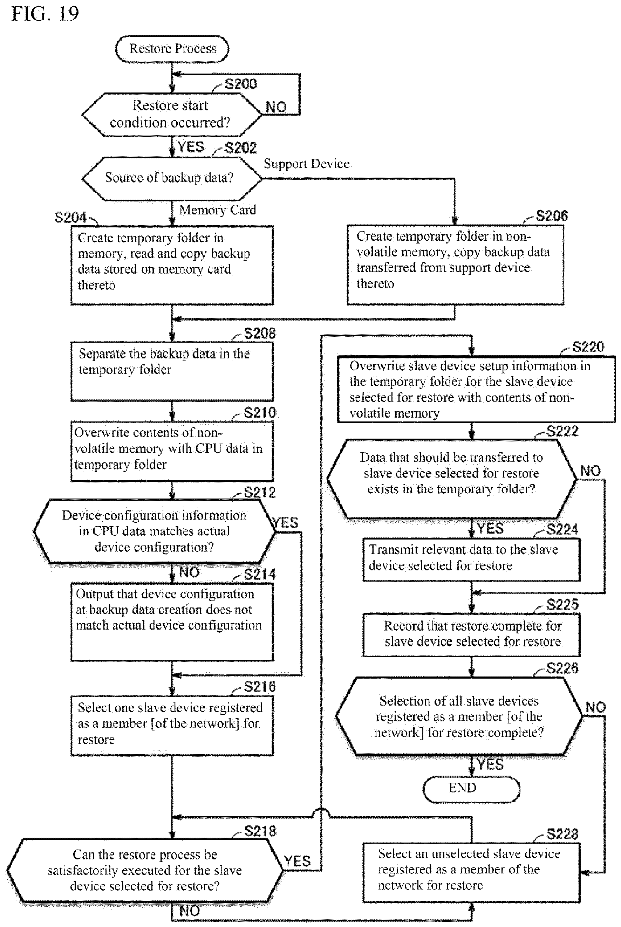

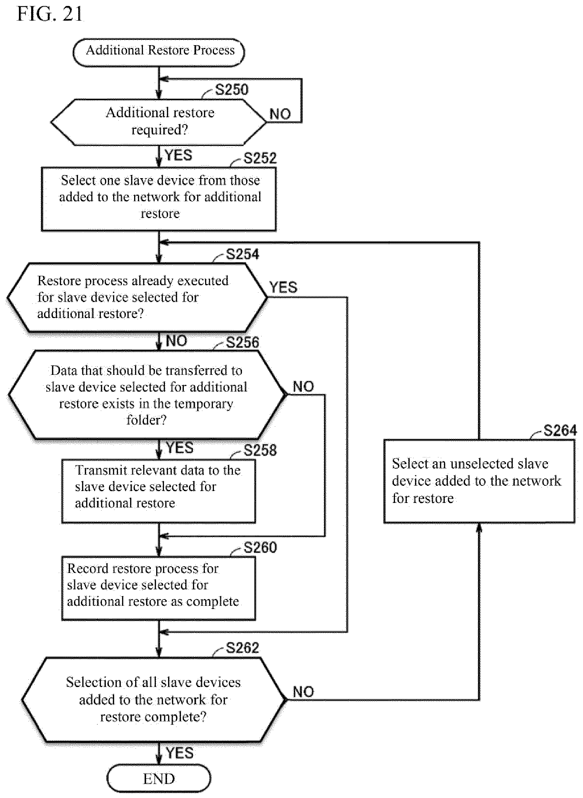

Figure 19 is a flowchart illustrating the flow of the restore process (case 1) according to the second embodiment. Each of the steps illustrated in Figure 19 and Figure 21 is typically implemented by execution of the firmware 190 (refer to Figure 4) on the microprocessor 112 in the CPU unit 110 (refer to Figure 3). However, all or a portion of these processes may be realized using an integrated circuit such as an ASIC, and the like.

Compared to the flowchart in Figure 17 illustrating the procedure for the restore process according to the first embodiment, the only difference is that the flowchart illustrated in Figure 19 executes step S225 after steps S224 and S226. Namely, the microprocessor 112 records the restore process in relation to a slave device selected for the restore as complete (step S225) on transmitting the corresponding data to the slave device selected for the restore (step S224), or when no data exists in the temporary folder that should be transferred to the slave device selected for the restore (NO at step S222).

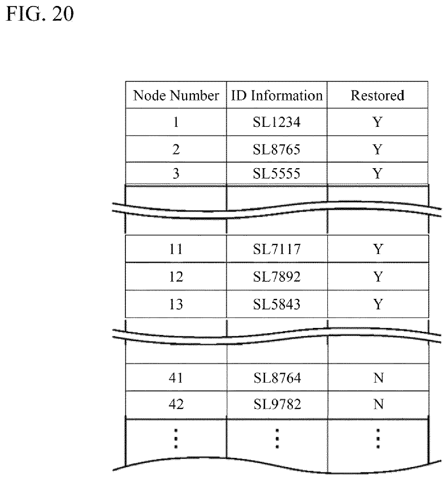

Figure 20 is a schematic diagram illustrating an example of the information recorded in the restore process according to the second embodiment (case 1) at the completion thereof. Referring to Figure 20, a node number and information on the slave device registered as a member of the network is stored in association with whether or not the restore process was completed. That is, information indicating whether or not the restore process was already performed is recorded for each slave device. In the example illustrated in Figure 20, "Y" indicates that the restore process was already performed, and "N" indicates that the restore process was not performed. When any kind of slave device is added, the information recorded regarding the completion of the restore process is referenced, and an additional restore process executed.

Figure 21 is a flowchart illustrating the flow of the restore process according to the second embodiment (case 1). Referring to Figure 21, the microprocessor 112 determines whether or not the additional restore process should be executed (step S250). More specifically, the microprocessor 112 determines whether or not a slave device was added, and/or whether or not the network connection for a slave device changed from null to valid. Given that the PLC 100 (CPU unit 110), which functions as the master device, continuously monitors the field network 108, the PLC 100 is therefore capable of determining whether or not a slave device was added to the network on the basis of the information from the continuous monitoring. The PLC 100 (CPU unit 110) is also capable of determining whether or not the network connection for a slave device changed from inactive to active on the basis of whether or not the device configuration information 152 changed.

When the PLC 100 determines that an additional restore process does not need to be executed (NO at step S250), the processing in step S250 is repeated.

On the other hand, when the PLC 100 determines that an additional restore process should be executed (YES at step S250), the microprocessor 112 selects one of the slave devices from the slave devices added as a slave device for the additional restore process. The microprocessor 112 then determines whether or not the restore process has already been executed for the slave device selected for the additional restore process (step S254). This determination is carried out on the basis of the kind of information recorded on completion of a restore process as illustrated in Figure 20.

When the restore process is not already executed (NO at step S254), the microprocessor 112 determines whether or not data that should be transferred to the slave device selected for the additional restore process (e.g., a program) is inside the temporary folder (step S256). When the data that must be transferred to the slave device selected for the additional restore process exists in the temporary folder (YES at step S256), the microprocessor 112 transmits the relevant data to the slave device selected for the additional restore process (step S258) via the field network 108. When the data that must be transferred to the slave device selected for the additional restore process does not exist in the temporary folder (NO at step S256), the processing at step S258 is skipped.

The microprocessor 112 then records that the additional restore process has been executed for the slave device selected for the additional restore process (step S260). At this point, the network connection of the relevant slave device is made valid.

After the execution of step S260, or, when the restore process has already been executed (YES at step 254), the microprocessor 112 determines whether or not the selection of all the slave devices added for the additional restore process is complete (S262). If the selection of all the slave devices added for an additional restore process is not complete (NO at step 262), the microprocessor 112 selects a not yet selected slave device from among those added for the additional restore process (step S264). The processing at and after step S254 is then repeated.

If the selection of all the slave devices added for an additional restore process is complete (YES at step 262), processing is terminated.

### k4: The Restore Process (Case 2: Continuous Execution of the Additional Restore Process)

The procedure for the restore process according to the second embodiment (case 2) is identical to the procedure for the restore process according to the first embodiment illustrated in Figure 17 and thus detailed description thereof will not be repeated here. Namely, when the additional restore process is continuously executed, there is no need to record whether or not the restore process was executed, and thus the completion of the restore process is not recorded.

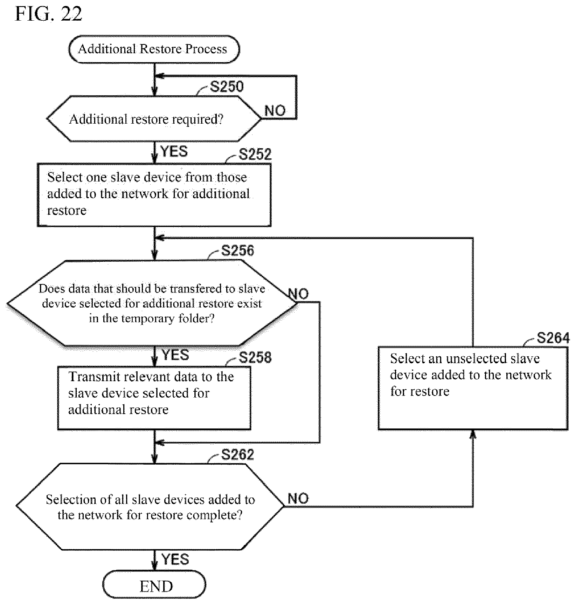

Figure 22 is a flowchart illustrating the flow of the restore process according to the second embodiment (case 2). The flowchart illustrated in Figure 22 is a more simplified version of the flowchart illustrating the procedure of the restore process according to the second embodiment (case 2) illustrated in Figure 21. The processing illustrated in Figure 22 practically identical to the processing illustrated in figure 21 are given identical step numbers.

Referring to Figure 21, the microprocessor 112 determines whether or not the additional restore process should be executed (step S250). When the PLC 100 determines that an additional restore process does not need to be executed (NO at step S250), the processing in step S250 is repeated.

When the PLC 100 determines that an additional restore process should be executed (YES, at step S250), the microprocessor 112 selects one of the slave devices from the slave devices added as a slave device for the additional restore process. The microprocessor 112 then determines whether or not data that must be transferred (e.g., a program, and the like) exists in the temporary folder for the slave device selected for the restore (step S222). When the data that must be transferred to the slave device selected for the additional restore process exists in the temporary folder (YES at step S256), the microprocessor 112 transmits the relevant data to the slave device selected for the additional restore process (step S258) via the field network 108.

After the execution of step S258, or, when the data that must be transferred to the slave device selected for the additional restore process does not exist in the temporary folder (NO, at step S256), the microprocessor 112 determines whether or not the selection of all the slave devices added for the additional restore process is complete (S262). If the selection of all the slave devices added for an additional restore process is not complete (NO at step 262), the microprocessor 112 selects a not yet selected slave device from among those added for the additional restore process (step S264). The processing at and after step S256 is then repeated.

If the selection of all the slave devices added for an additional restore process is complete (YES at step 262), processing is terminated.

### k5: Advantages

According to the second embodiment, the restore process takes place automatically for a device added after a restore process. Therefore, as long as the devices are contained within a preliminarily prepared backup data, the necessary setup information is transferred even for a device added after the restore process. Consequently, even an end-user with little knowledge can activate the control system on the spot after exchanging a device or completing the maintenance of the equipment.

### L. Third Embodiment

As described with reference to the above Figures 8 through 12, when building a plurality of control systems containing mutually similar device configurations, in the third embodiment, the backup data 400 for a control system including all the slave devices (base device configuration) is preliminarily prepared using the support device 300 and stored in each of the control systems (PLC 100). In other words, the backup data 400 is supplied by the support device 300. Each of the control systems uses only the data from the backup data 400 necessary for each of the device configurations to execute the restore process.

By adopting this kind of method, it is only necessary to manage the shared backup data 400 (including the setup information for all the devices), thus simplifying the management procedure.

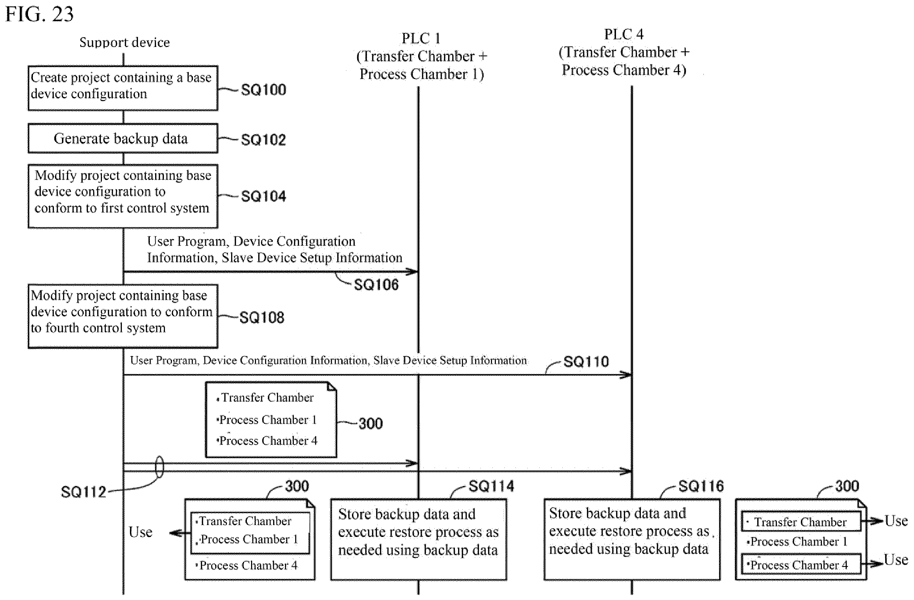

Figure 23 is a schematic diagram for describing an outline of the backup process and the restore process implemented in a third embodiment. Figure 15 illustrates an example of a first control system (including a first PLC 100) built for a transfer chamber 10 and a first process chamber 20, and a fourth control system (fourth PLC 100) built for a transfer chamber 10 and the fourth process chamber 26.

In this case, the support device 300 is used to generate backup data 400 containing all the devices. The actual PLC 100 or the slave devices is not required when generating the backup data 400, and thus the generation of the backup data may be done off-line. That is, the backup data 400 may be generated on the support device 300 independently. This backup data 400 contains the setup information for the transfer chamber 10, the first process chamber 20, and the fourth process chamber 26.

The first control system (first PLC 100) uses only the setup information for the transfer chamber 10 and the first process chamber 20 contained in the backup data 400 to execute the restore process. Namely, the first PLC 100 ignores the setup information for the fourth process chamber 26.

The fourth control system (fourth PLC 100) uses only the setup information for the transfer chamber 10 and the fourth process chamber 26 contained in the backup data 400 to execute the restore process. That is, the fourth PLC 100 ignores the setup information for the first process chamber 20.

This backup data 400 contains the setup information for the transfer chamber 10, the first process chamber 20, and the fourth process chamber 26.

A more specific example of the processing is described with reference to figure 23. First, the user (system developer) uses the support device 300 to create a project (sequence SQ100) for a base device configuration (i.e., a control system including the transfer chamber 10, the process the first process chamber 20, and the fourth process chamber 26). Once the project is created, the user generates the backup data 400 on the support device 300 (sequence SQ102).

The user then updates the project for the base device configuration created during sequence SQ100 to conform to the first control system (sequence SQ104). The user compiles the updated project and transmits the user program, the device configuration information, and the slave device set up information generated therefrom to the first PLC 100 (sequence SQ106).

The user similarly updates the project for the base device configuration created during sequence SQ100 to conform to the fourth control system (sequence SQ108). The user then compiles the updated project and transmits the user program, the device configuration information, and the slave device set up information generated therefrom to the fourth PLC 100 (sequence SQ110).

Finally, the user transmits the backup data 400 created in sequence SQ102 to the first PLC 100, and the fourth PLC 100 (sequence SQ112).

The first PLC 100 stores the backup data 400, and executes the restore process using the backup data 400 as needed (sequence SQ114). During this restore process, the first PLC 100 uses only the setup information for the transfer chamber 10 and the first process chamber 20 contained in the backup data 400.

The fourth PLC 100 similarly stores the backup data 400, and executes the restore process using the backup data 400 as needed (sequence SQ116). During this restore process, the first PLC 100 uses only to set up information for the transfer chamber 10 and the fourth process chamber 26 contained in the backup data 400.

According to the third embodiment, if shared backup data containing all the devices is generated, the restore process can be executed for any control system including all or some of those devices (device configuration) using the aforementioned shared backup data. Therefore, the process of managing the backup data can be simplified. Additionally, the shared backup data is generated using the support device; therefore for instance, the aforementioned shared backup data can be generated even when a control system including all the devices (device configuration) does not exist.

All aspects of the embodiments disclosed should be considered merely examples and not limitations as such.

### Reference Numerals

- 1: Semiconductor manufacturing device
- 2: Field network
- 10: Transfer chamber
- 12: Transfer robot
- 20, 22, 24, 26: Process chamber
- 21, 23, 25, 27, 31, 35: Gate valve
- 30, 34: Load lock chamber
- 33,37: Communication unit
- 100: PLC
- 102: USB connector
- 104: Field network connector
- 106: Memory card interface
- 110: CPU unit
- 111: Chipset
- 112: Microprocessor
- 113: Main memory
- 114: Non-volatile memory
- 116: Field Network Controller
- 117: PLC system bus controller
- 120, 204: IO unit
- 130: Power unit
- 200: Remote IO terminal
- 202: Communication coupler
- 210: Servo Motor Driver
- 212: Servo motor
- 250: Communication unit
- 252: Input Output unit
- 254: Drive circuit
- 260: Computation unit
- 262: Processor
- 264: Memory
- 300: Support device
- 302: CPU
- 304: ROM
- 306: RAM
- 308: Hard drive
- 310: Keyboard
- 312: Mouse
- 314: Display
- 316: CD-ROM Drive
- 320: Bus
- 380: Memory card
- 390: CD-ROM

## Claims

1. A control device adapted to serve as a master device (100) on a network (108) and to control one or a plurality of slave devices (200, 210) over the network (108), the control device comprising:
a storage unit (113, 114) that stores device configuration information (152, 372) including information indicating whether each of the slave devices (200, 210) registered as a member of the network (108) has a network connection that is active or inactive; and setup information (154, 374) including parameters necessary for controlling the registered slave devices (200, 210);
**characterized by**
a processing unit (110) configured to execute a backup process that generates backup data (400) using data from the storage unit (113, 114) and from the one or the plurality of slave devices (200, 210), and a restore process using the backup data(400) ;
wherein
the backup data (400) includes the setup information (154, 374) for each of the one or the plurality of slave devices (200, 210), and
when executing the restore process, the processing unit (110):
reads the device configuration information (152, 372), and
identifies those slave devices (200, 210) included in the backup data
that have an active network connection in the read device
configuration information (152, 372), or
that are present on the network (108), and
restores the setup information corresponding to the identified slave devices (200, 210).

2. The control device according to claim 1, wherein the restore process includes a process where the control device transmits the necessary data regarding the slave device (200, 210) that is to be restored.

3. The control device according to claim 1 or 2, wherein when any of the slave devices (200, 210) change to having an active network connection, or when any of the slave devices (200, 210) come to exist on the network (108), the processing unit (110) restores the corresponding setup information (154, 374) contained in the data.

4. The control device according to any one of the claims 1 to 3, wherein the data is supplied by a support device (300).

5. The control device according to any one of the claims 1 to 4, wherein the processing unit (110) is configured to generate the backup data (400) by, during the backup process, packaging data that is stored storage unit (113, 114) and the setup information (154, 374) for each of the one or the plurality of slave devices (200, 210) .

6. A method of operating a control device that serves as a master device (100) on a network (108) and controls one or a plurality of slave devices (200, 210) over the network (108), the method of operating a control device comprising:
a step of storing device configuration information (152, 372) including information indicating whether each of the slave devices (200, 210) registered as a member of the network (108) has a network connection that is active or inactive; and setup information (154, 374) including parameters necessary for controlling the registered slave devices (200, 210);
**characterized by**
a step of executing a backup process that generates backup data (400) using data stored in the storing step, and a restore process using the backup data (400), wherein the backup data (400) includes the setup information (154, 374) for each of the one or the plurality of slave devices (200, 210), and
during the step of executing the restore process,
the device configuration information (152, 372) is read, and
those slave devices (200, 210) are identified that are included in the backup data
that have an active network connection, or
that are present on the network (108), and
the setup information (154, 374) corresponding to the identified slave devices (200, 210) is restored.

## Patentansprüche

1. Steuervorrichtung, die eingerichtet ist, als eine Master-Vorrichtung (100) in einem Netzwerk (108) zu dienen und eine oder mehrere Slave-Vorrichtungen (200, 210) über das Netzwerk (108) zu steuern, wobei die Steuervorrichtung aufweist:
eine Speichereinheit (113, 114), welche Vorrichtungs-Konfigurationsinformationen (152, 372), welche Informationen umfassen, die andeuten, ob jede der Slave-Vorrichtungen (200, 210), die als ein Element des Netzwerks (108) registriert sind, eine Netzwerkverbindung haben, die aktiv oder inaktiv ist; und Setup-Informationen (154, 374) speichert, welche Parameter umfassen, die zum Steuern der registrierten Slave-Vorrichtungen (200, 210) notwendig sind;
**gekennzeichnet durch**
eine Verarbeitungseinheit (110), die eingerichtet ist, einen Backup-Vorgang auszuführen, der Backup-Daten (400) unter Verwendung von Daten aus der Speichereinheit (113, 114) und aus einer oder mehreren der Slave-Vorrichtungen (200, 210) erzeugt, und einen Wiederherstellungsvorgang unter Verwendung der Backup-Daten (400) auszuführen;
wobei die Backup-Daten (400) die Setup-Informationen (154, 374) für jede der einen oder mehreren Slave-Vorrichtungen (200, 210) umfasst, und
wenn der Wiederherstellungsvorgang ausgeführt wird, die Verarbeitungseinheit (110):
die Vorrichtungs-Konfigurationsinformationen (152, 372) einliest, und
jene Slave-Vorrichtungen (200, 210) identifiziert, die in den Backup-Daten umfasst sind,
die eine aktive Netzwerkverbindung in den eingelesenen Vorrichtungs-Konfigurationsinformationen (152, 372) haben oder
die in dem Netzwerk (108) vorliegen, und
die Setup-Informationen entsprechend der identifizierten Slave-Vorrichtungen (200, 210) wiederherstellt.

2. Steuervorrichtung gemäß Anspruch 1, wobei der Wiederherstellungsvorgang einen Vorgang umfasst, bei dem die Steuervorrichtung die notwendigen Daten betreffend die Slave-Vorrichtung (200, 210), die wiederherzustellen ist, überträgt.

3. Steuervorrichtung gemäß Anspruch 1 oder 2, wobei, wenn sich eine der Slave-Vorrichtungen (200, 210) dahingehend ändert, dass sie eine aktive Netzwerkverbindung aufweist, oder wenn eine der Slave-Vorrichtungen (200, 210) in das Netzwerk kommt (108), die Verarbeitungsvorrichtung (110) die entsprechenden Setup-Informationen (154, 374), die in den Daten enthalten sind, wiederherstellt.

4. Steuervorrichtung gemäß einem der Ansprüche 1 bis 3, wobei die Daten über eine Unterstützungsvorrichtung (300) zugeführt werden.

5. Steuervorrichtung gemäß einem der Ansprüche 1 bis 4, wobei die Verarbeitungseinheit (110) eingerichtet ist, die Backup-Daten (400), während des Backup-Vorgangs, durch Packen der Daten, die in der Speichereinheit (113, 114) gespeichert sind, und der Setup-Informationen (154, 374) für jede der einen oder mehreren Slave-Vorrichtungen (200, 210) zu erzeugen.

6. Verfahren zum Betreiben einer Steuervorrichtung, die als eine Master-Vorrichtung (100) in einem Netzwerk (108) dient und eine oder mehrere Slave-Vorrichtungen (200, 210) über das Netzwerk (108) steuert, wobei das Verfahren zum Betreiben einer Steuervorrichtung aufweist:
einen Schritt eines Speicherns von Vorrichtungs-Konfigurationsinformationen (152, 372), die Informationen umfassen, die andeuten, ob jede der Slave-Vorrichtungen (200, 210), die als ein Element des Netzwerks (108) registriert ist, eine Netzwerkverbindung aufweist, die aktiv oder inaktiv ist, und Setup-Informationen (154, 374), die Parameter umfassen, die zum Steuern der registrierten Slave-Vorrichtungen (200, 210) notwendig sind;
**gekennzeichnet durch**
einen Schritt eines Ausführens eines Backup-Vorgangs, der Backup-Daten (400) unter Verwendung von Daten, die in dem Speicherschritt gespeichert werden, erzeugt, und eines Wiederherstellungsvorgangs unter Verwendung der Backup-Daten (400), wobei die Backup-Daten (400) die Setup-Informationen (154, 374) für jede der einen oder mehreren Slave-Vorrichtungen (200, 210) umfasst, und
während des Schritts des Ausführens des Wiederherstellungsvorgangs,
die Vorrichtungs-Konfigurationsinformationen (152, 372) gelesen werden, und
jene Slave-Vorrichtungen (200, 210) identifiziert werden, die in den Backup-Daten umfasst sind,
die eine aktive Netzwerkverbindung haben, oder
die in dem Netzwerk (108) vorliegen, und
die Setup-Informationen (154, 374) entsprechend der identifizierten Slave-Vorrichtungen (200, 210) wiederhergestellt werden.

## Revendications

1. Dispositif de commande conçu pour servir de dispositif maître (100) sur un réseau (108) et pour commander un ou une pluralité de dispositifs esclaves (200, 210) sur le réseau (108), le dispositif de commande comprenant :
une unité de stockage (113, 114) qui stocke des informations de configuration de dispositifs (152, 372) comprenant des informations indiquant si chacun des dispositifs esclaves (200, 210) enregistrés en tant que membre du réseau (108) a une connexion réseau active ou inactive ; et des informations de paramétrage (154, 374) comprenant les paramètres nécessaires pour commander les dispositifs esclaves enregistrés (200, 210) ;
**caractérisé par**
une unité de traitement (110) configurée pour exécuter un processus de sauvegarde qui génère des données de sauvegarde (400) en utilisant des données provenant de l'unité de stockage (113, 114) et desdits un ou plusieurs dispositifs esclaves (200, 210), et un processus de restauration utilisant les données de sauvegarde (400) ;
dans lequel les données de sauvegarde (400) comprennent les informations de paramétrage (154, 374) pour chacun desdits un ou plusieurs dispositifs esclaves (200, 210), et
lors de l'exécution du processus de restauration, l'unité de traitement (110) :
lit les informations de configuration de dispositifs (152, 372), et
identifie les dispositifs esclaves (200, 210) inclus dans les données de sauvegarde
qui ont une connexion réseau active dans les informations de configuration de dispositifs lues (152, 372), ou
qui sont présents sur le réseau (108), et
restaure les informations de configuration correspondant aux dispositifs esclaves identifiés (200, 210).

2. Dispositif de commande selon la revendication 1, dans lequel le processus de restauration comprend un processus dans lequel le dispositif de commande transmet les données nécessaires concernant le dispositif esclave (200, 210) à restaurer.

3. Dispositif de commande selon la revendication 1 ou 2, dans lequel, lorsque l'un quelconque des dispositifs esclaves (200, 210) se met à avoir une connexion réseau active, ou lorsque l'un quelconque des dispositifs esclaves (200, 210) se met à exister sur le réseau (108), l'unité de traitement (110) restaure les informations de configuration correspondantes (154, 374) contenues dans les données.

4. Dispositif de commande selon l'une quelconque des revendications 1 à 3, dans lequel les données sont fournies par un dispositif de support (300).

5. Dispositif de commande selon l'une quelconque des revendications 1 à 4, dans lequel l'unité de traitement (110) est configurée pour générer les données de sauvegarde (400) en groupant, pendant le processus de sauvegarde, des données qui sont stockées dans une unité de stockage (113, 114) et les informations de paramétrage (154, 374) pour chacun desdits un ou plusieurs dispositifs esclaves (200, 210).

6. Procédé de fonctionnement d'un dispositif de commande qui sert de dispositif maître (100) sur un réseau (108) et commande un ou plusieurs dispositifs esclaves (200, 210) sur le réseau (108), le procédé de fonctionnement d'un dispositif de commande comprenant :
une étape de stockage d'informations de configuration de dispositifs (152, 372) comprenant des informations indiquant si chacun des dispositifs esclaves (200, 210) enregistrés en tant que membre du réseau (108) a une connexion réseau qui est active ou inactive ; et
des informations de paramétrage (154, 374) comprenant des paramètres nécessaires pour commander les dispositifs esclaves enregistrés (200, 210) ;
**caractérisé par**
une étape d'exécution d'un processus de sauvegarde qui génère des données de sauvegarde (400) en utilisant des données stockées dans l'étape de stockage, et un processus de restauration utilisant les données de sauvegarde (400), dans lequel les données de sauvegarde (400) comprennent les informations de paramétrage (154, 374) pour chacun desdits un ou plusieurs dispositifs esclaves (200, 210), et
pendant l'étape d'exécution du processus de restauration,
les informations de configuration de dispositifs (152, 372) sont lues, et
on identifie les dispositifs esclaves (200, 210) qui sont inclus dans les données de sauvegarde
qui ont une connexion réseau active, ou
qui sont présents sur le réseau (108), et
les informations de paramétrage (154, 374) correspondant aux dispositifs esclaves identifiés (200, 210) sont restaurées.
